# DEMANDE DE BREVET EUROPEEN

(11) **EP 1 586 826 A1**
(43) Date de publication de la demande: **19.10.2005**
(21) Numéro de dépôt: 05101562.6
(22) Date de dépôt: 01.03.2005
(51) Int. Cl.: F24H 3/00, B60H 1/00

(54) **Ensemble de chauffage pour installation de chauffage, de ventilation et/ou d'air climatisé d'un habitacle de véhicule.**

(30) Priorité: 13.04.2004 FR 0403903
(71) Demandeur: Valeo Systèmes Thermiques, 78321 Le Mesnil St Denis Cedex (FR)
(72) Inventeur: Colette, Olivier, 78310 Le Mesnil St. Denis (FR); Pierron, Frédéric, 78120, Rambouillet (FR); Terranova, Gilbert, 78610, Le Perray en Yvelines (FR); Haussmann, Roland, 69168, Wiesloch (DE)

(57) **Abrégé**

L'invention a pour objet un ensemble de chauffage associant un radiateur principal (1) à circulation de fluide et un radiateur électrique. Ce dernier est disposé sur une face du radiateur principal (1) définissant son plan général, en étant constitué d'une pluralité d'éléments chauffants (6) indépendants. Ces éléments chauffants (6) sont composés chacun d'un bloc élémentaire électrique de chauffage (7), muni de moyens de connexion (31,31') à une source électrique, et d'un élément à ailettes (8). Ces éléments chauffants (6) sont rassemblés sur une structure de jonction du radiateur électrique sur la face du radiateur principal (1).

## Description

### Domaine technique de l'invention.

L'invention est du domaine des installations de chauffage, de ventilation et/ou d'air climatisé, notamment d'un habitacle de véhicule, et plus particulièrement des radiateurs de chauffage que comportent de telles installations pour modifier la température de l'air ventilé.

### Etat de la technique.

On rappelle que les installations de chauffage, de ventilation et/ou d'air climatisé pour habitacle de véhicule, comprennent un circuit d'air dans lequel est interposé un ensemble de chauffage. Celui-ci associe couramment un radiateur principal à circulation du liquide de refroidissement de la motorisation du véhicule, auquel est accessoirement adjoint un radiateur électrique. Le radiateur principal est globalement plan et comporte des orifices d'entrée et de sortie du liquide, une pluralité de tubes assurant la circulation du fluide de l'un à l'autre de ces orifices. Des éléments à ailettes sont interposés entre les tubes pour favoriser les échanges thermiques entre le radiateur principal et l'air. Cet agencement est tel que la modification de la température de l'air ventilé est obtenue par son passage à travers les éléments à ailettes, dont la température est modifiée par le contact avec la pluralité de tubes.

Se pose le problème de l'organisation de l'adjonction du radiateur électrique au radiateur principal, compte tenu de diverses contraintes liées à un encombrement de l'ensemble de chauffage qui est souhaité restreint pour un rendement le plus élevé possible. Cependant, la compacité optimale de l'ensemble de chauffage doit prendre en compte la proximité qui en découle entre le radiateur principal et le radiateur électrique. Une telle proximité tend à induire un échauffement inopportun par le radiateur électrique du liquide circulant à l'intérieur du radiateur principal, avec en corollaire une perte du rendement recherché du radiateur électrique pour le chauffage de l'air. En outre, l'organisation des radiateurs principal et électrique, tant indépendamment qu'au regard de leur juxtaposition, doit tendre à réduire les obstacles qu'ils constituent à l'encontre de la circulation de l'air à leur travers, pour éviter des pertes de charge de l'air ventilé.

Par exemple, une première solution générale connue consiste à placer le radiateur électrique en aval du radiateur principal dans le sens de circulation d'air. Ce dernier est couramment organisé à l'instar du radiateur principal en un corps globalement plan comportant des éléments à ailettes entre lesquels s'étend un organe électrique chauffant, formé dans ce cas de résistances ou analogues. Une électronique de commande peut être placée perpendiculairement aux organes chauffants pour la mise en oeuvre de ces derniers. Un tel radiateur électrique est disposé parallèlement au voisinage du radiateur principal par l'intermédiaire d'un châssis porteur commun. On pourra par exemple se reporter au document FR2771342 (VALEO CLIMATISATION). Une telle solution favorise le rendement de l'ensemble de chauffage en optimisant les échanges thermiques entre l'air et les différents radiateurs, et en limitant le réchauffement par le radiateur électrique du liquide de refroidissement circulant à l'intérieur du radiateur principal. En outre, un tel ensemble de chauffage modulaire offre le choix d'adjoindre ou non le radiateur électrique au radiateur principal. Cependant, les avantages procurés sont obtenus au détriment d'un encombrement conséquent de l'ensemble de chauffage et d'une complexité inopportune de sa structure, notamment en raison des modalités de jonction entre les deux radiateurs principal et électrique.

Une deuxième solution générale connue consiste à intégrer des blocs chauffants électriques entre les ailettes et les tubes du radiateur principal. On pourra par exemple se reporter au document FR2724874 (BEHR) qui décrit un tel ensemble de chauffage. Plus précisément, le radiateur principal est équipé de résistances électriques à coefficient de température positif (CTP) qui sont interposées entre et le long des éléments à ailettes du radiateur principal, par remplacement sélectif des tubes que ce dernier comporte. Une telle solution permet de réduire considérablement l'encombrement de l'ensemble de chauffage. Toutefois, l'interposition des CTP entre les ailettes affecte le rendement du radiateur principal, qui est partiellement privé de tubes auxquels sont substitués les CTP. De plus, l'organisation de l'ensemble de chauffage en une alternance successive de tubes, d'éléments à ailettes et de CTP, induit une proximité étroite inopportune entre les CTP du radiateur électrique et les tubes du radiateur principal, avec pour conséquence un échange thermique entre eux affectant le rendement des CTP pour le chauffage de l'air. Par ailleurs, cette solution se fait au détriment de la modularité de l'ensemble de chauffage, le radiateur principal et le radiateur électrique, définitivement intimement liés entre eux, n'offrant pas une telle faculté.

Il en ressort finalement qu'aucune des solutions habituelles dans le domaine ne procure un résultat pleinement satisfaisant.

### Objet de l'invention.

La présente invention s'inscrit dans la recherche d'un compromis entre les différentes contraintes susvisées, et vise notamment à proposer un ensemble de chauffage d'une installation de chauffage, de ventilation et/ou d'air climatisé, notamment pour habitacle d'un véhicule, qui associe un radiateur principal à circulation de fluide et un radiateur électrique, et dont les structures répondent au mieux aux besoins dans le domaine.

La démarche inventive de la présente invention a consisté à choisir de disposer le radiateur électrique suivant une surface d'échange thermique avec l'air à chauffer qui est distincte de celle du radiateur principal, pour éviter une proximité entre les tubes du radiateur principal et les organes chauffants du radiateur électrique, qui est susceptible d'affecter le rendement de ce dernier pour le chauffage de l'air. A partir de ce choix, il est proposé de simplifier la structure de l'ensemble de chauffage en subdivisant le radiateur électrique en une pluralité d'éléments chauffants indépendants associant chacun au moins un bloc élémentaire de chauffage électrique, notamment CTP, et au moins un élément à ailettes. Une telle structure du radiateur électrique permet de simplifier et de limiter l'encombrement, non seulement du radiateur électrique intrinsèquement, mais aussi des moyens d'assemblage l'un à l'autre du radiateur électrique et du radiateur principal.

Plus précisément, la structure ainsi obtenue du radiateur électrique est assemblée au radiateur principal en utilisant ce dernier comme structure porteuse des éléments chauffants du radiateur électrique, soit individuellement soit par l'intermédiaire d'au moins une ossature sur laquelle sont rassemblés les éléments chauffants du radiateur électrique. Ces derniers sont préférentiellement placés au plus proche de l'une des grandes faces du radiateur principal, indifféremment sa face amont et/ou sa face avale par rapport au sens de circulation de l'air, et notamment sont soit maintenus plaqués contre celle-ci au moyen de l'ossature, soit placés en son sein. Dans ce dernier cas les éléments chauffants du radiateur électrique sont par exemple portés par des brides ou placés à l'intérieur de logements que comporte la face du radiateur principal, et notamment les éléments à ailettes de ce dernier. Par exemple encore, les blocs élémentaires du radiateur électrique sont disposés entre des prolongements des éléments à ailettes du radiateur principal, qui sont avantageusement exploités non seulement pour porter les blocs élémentaires du radiateur électrique, mais aussi pour former les éléments à ailettes du radiateur électrique.

On comprendra que selon la présente invention portant sur le choix de la distinction mentionnée des surfaces à échange thermique de l'un à l'autre des radiateurs principal et électrique, les éléments chauffants de ce dernier sont exclusivement disposés sur le radiateur principal sans superposition géométrique de surface avec les tubes du radiateur principal, y compris dans le cas où les élément chauffants du radiateur électrique sont placés au sein de la face du radiateur principal. Il en ressort que l'ensemble de chauffage de la présente invention associe de manière distincte un radiateur principal et un radiateur électrique, dont les surfaces respectives d'échange thermique sont maintenues éloignées l'une de l'autre dans le sens de circulation de l'air.

Selon une autre approche de la présente invention, il est proposé un ensemble de chauffage associant un radiateur principal et des blocs élémentaires de chauffage électrique, notamment CTP ou analogue, qui sont placés au contact des éléments à ailettes du radiateur principal. Les blocs élémentaires du radiateur électrique sont plus particulièrement placés à distance amont ou avale des tubes du radiateur principal dans le sens de circulation de l'air. Notamment et selon un premier exemple de réalisation, les blocs élémentaires du radiateur électrique sont interposés entre des prolongements des éléments à ailettes du radiateur principal, ces prolongements constituant d'une part des éléments à ailettes du radiateur électrique, et d'autre part des organes de jonction des blocs élémentaires du radiateur électrique à distance, néanmoins proche, des tubes du radiateur principal dans le sens de circulation de l'air. Notamment encore et selon un deuxième exemple de réalisation, les blocs élémentaires du radiateur électrique sont fixés contre l'une au moins des grandes faces avale et/ou amont du radiateur principal, dans le sens de circulation de l'air, et plus précisément contre les éléments à ailettes de ce dernier. Cette fixation est réalisée par l'intermédiaire d'une ossature porteuse des blocs élémentaires du radiateur électrique, auxquels sont associés des éléments à ailettes pour constituer une pluralité d'éléments chauffants du radiateur électrique.

Selon une définition générale de la présente invention, l'ensemble de chauffage proposé est notamment destiné à équiper une installation de chauffage, de ventilation et/ou d'air climatisé, notamment pour habitacle d'un véhicule. Cet ensemble de chauffage comprend un radiateur principal à circulation de fluide composé d'au moins une boîte collectrice munie d'orifices d'entrée et de sortie du fluide, entre lesquels s'étend une pluralité de tubes assurant la circulation du fluide. Ces tubes sont interposés entre et le long d'une pluralité d'éléments à ailettes. Cet ensemble de chauffage comprend aussi un radiateur électrique comprenant au moins un organe chauffant électrique interposé entre une pluralité d'éléments à ailettes et muni de moyens de connexion à une source électrique et à des organes électroniques de commande. Cet ensemble de chauffage comprend en outre des moyens d'assemblage entre eux du radiateur principal et du radiateur électrique.

Un tel ensemble de chauffage est principalement reconnaissable selon des dispositions générales de la présente invention, en ce que le corps du radiateur électrique est subdivisé en une pluralité d'éléments chauffants indépendants, composés chacun d'au moins un bloc élémentaire de chauffage électrique muni de dits moyens respectifs de connexion et d'au moins un élément à ailettes. La pluralité d'éléments chauffants est rassemblée sur une structure de jonction du radiateur électrique sur au moins une face du radiateur principal, et notamment l'une quelconque au moins de ses grandes faces amont ou avale dans le sens de circulation de l'air, définissant son plan général. On comprendra que les éléments chauffants rassemblés définissent de préférence un ensemble globalement plan disposés parallèlement à la face du radiateur principal et à distance des tubes de ce dernier, en étant rapportés par l'intermédiaire de la structure de jonction qui est, selon diverses variantes, soit constituée d'une ossature ou analogue, soit formée directement à partir de la face du radiateur principal, et notamment des éléments à ailettes de ce dernier.

### Description des figures.

La présente invention sera mieux comprise à la lecture de la description qui va en être faite d'exemples de réalisation en relation avec les figures des planches annexées, dans lesquelles :
Les fig.1 et fig.2 sont des illustrations d'un ensemble de chauffage selon une première variante de réalisation de la présente invention, en perspective respectivement éclatée et assemblée.
La fig.3 est un schéma de face illustrant un exemple de réalisation d'un ensemble de chauffage, selon une deuxième variante de la présente invention.
La fig.4 est un détail de structure d'un autre exemple de réalisation d'un ensemble de chauffage selon la deuxième variante de réalisation précédemment visée.
La fig.5 est une vue éclatée de profil de l'ensemble de chauffage illustré sur la fig.3.
Les fig.6, fig.7 et fig.8 sont des schémas de profil d'un ensemble de chauffage de la présente invention, selon diverses variantes respectives de réalisation.
Les fig.9 et fig.10 sont des schémas illustrant un élément chauffant d'un radiateur électrique d'un ensemble de chauffage de la présente invention, selon diverses formes respectives de réalisation.
Les fig.11, fig.12, fig.13 sont des schémas en perspective de diverses variantes d'aménagement des organes de commande d'un radiateur électrique constituant d'un ensemble de chauffage de la présente invention.

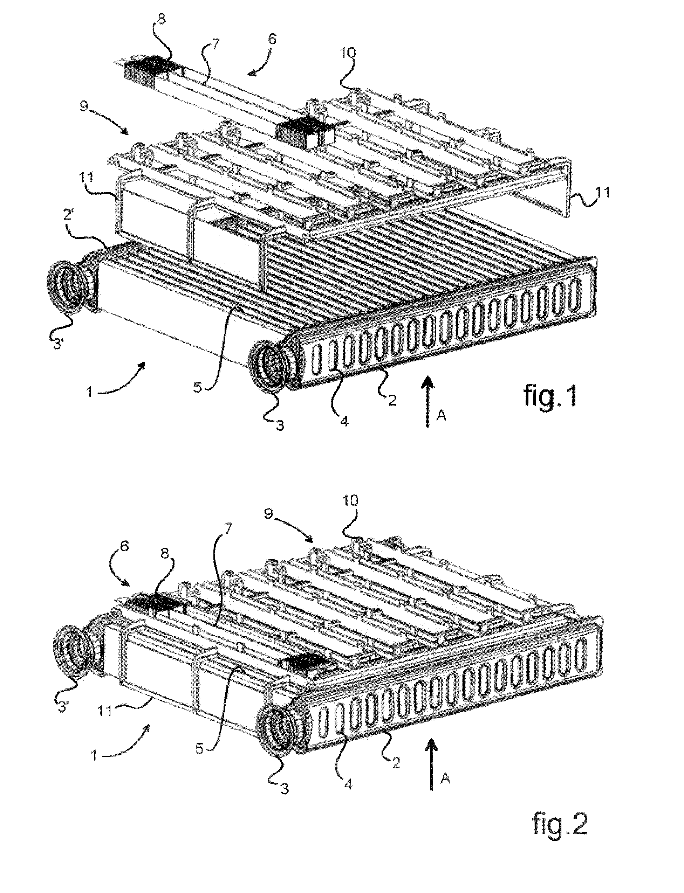

On rappelle qu'un radiateur principal (1) d'un ensemble de chauffage d'une installation de chauffage, ventilation et/ou climatisation d'un habitacle d'un véhicule est du type à circulation de fluide, tel que particulièrement illustré pour exemple sur la fig.1. Ce radiateur principal (1) comprend une boîte collectrice (2,2') qui sont respectivement pourvues d'orifices d'entrée (3) et de sortie (3') du liquide de refroidissement de la motorisation du véhicule. Les boîtes collectrices (2,2') sont en relation avec des tubes (4), qui sont interposés entre et le long d'une pluralité d'éléments à ailettes (5). On notera à ce stade de la description que le radiateur principal (1) illustré sur les figure est du type connu en "I", mais que l'organisation de ce radiateur est susceptible d'être relativement quelconque sans pour autant déroger aux règles de la présente invention. Un tel radiateur principal (1) est destiné à être accessoirement équipé d'un radiateur électrique, qui lui est adjoint à sa face avale dans le sens de circulation de l'air ventilé par l'installation, repéré sur les figures par la flèche A. On notera que la position avale est donnée à titre d'exemple, le radiateur électrique de la présente invention étant susceptible d'être rapporté sur l'une et/ou l'autre des grandes faces du radiateur principal (1) définissant son plan général. Ce radiateur électrique est composé d'une pluralité d'éléments chauffants (6) associant un bloc élémentaire de chauffage électrique (7) et au moins un élément à ailettes (8), ces élément chauffants (6) étant rassemblés sur une structure de jonction du radiateur électrique au radiateur principal (1).

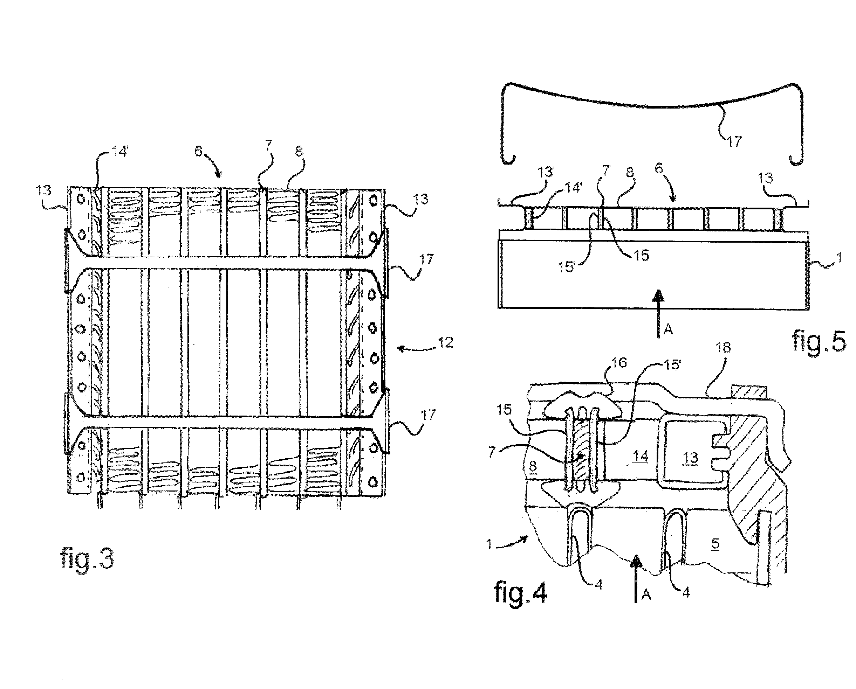

Sur les différents exemples de réalisation illustrés sur les fig.1 et fig.2 d'une part, et sur les fig.3 à fig.5 d'autre part, la structure de jonction est formée d'une ossature globalement plane, qui est équipée d'organes de réception des éléments chauffants (6) et de moyens de fixation contre la face avale du radiateur principal (1). Ces moyens de fixation de l'ossature sur le radiateur principal (1) sont préférentiellement constitués par un organe élastiquement déformable, qui est en prise sur l'ossature et sur le radiateur principal (1). Ces dispositions sont telles que la liaison entre l'ossature et le radiateur principal (1) est obtenue par serrage élastique conjoint au moyen de l'organe de fixation à l'encontre de la déformation de ce dernier. Selon les exemples de réalisation illustrés, ces dispositions avantageuses de jonction se font par serrage élastique. Cependant, la jonction entre l'ossature et le radiateur principal (1) est susceptible d'être réalisée par d'autres moyens connus sans déroger aux règles générales de la présente invention.

Plus particulièrement sur l'exemple de réalisation illustré sur les fig.1 et fig.2, l'ossature (9) est agencée en squelette à mailles, ou agencement analogue selon laquelle l'ossature (9) est formée d'une structure rigide largement ajourée. Cette ossature en squelette (9) est équipée d'une pluralité d'organes (10) de réception respective des éléments chauffants (6), qui sont avantageusement déformables pour l'obtention d'une liaison par emboîtement élastique des éléments chauffants (6) sur l'ossature (9). Les moyens de fixation de l'ossature (9) sur le radiateur principal (1) sont quant à eux par exemple constitués par des pattes flexibles (11) ménagées latéralement sur l'ossature (9). De préférence, l'ossature (9) est constituée par un élément monobloc qui est avantageusement obtenue par moulage d'une matière plastique.

Plus particulièrement encore sur les exemples de réalisation illustrés sur les fig.3, fig.4 et fig.5, l'ossature (12) est principalement constituée d'un jeu de réglettes (13,13'), qui sont reliées l'une à l'autre à distance par l'intermédiaire de traverses. Les éléments chauffants (6) sont disposés et sont conjointement maintenus entre les réglettes (13,13') par serrage. Plus précisément, les éléments chauffants (6) sont de préférence assemblés successivement les uns aux autres, puis sont conjointement enserrés entre les réglettes (13,13') par l'intermédiaire de moyens élastiques d'interposition (14,14'). Ces derniers (14,14') sont notamment ménagés sur l'une et l'autre des réglettes (13,13') pour exercer des poussées antagonistes de serrage élastique latéralement contre l'ensemble des éléments chauffants (6) assemblés. Sur l'exemple préféré de réalisation de l'assemblage des éléments chauffants (6) entre eux, représenté sur la fig.4, les éléments chauffants (6) sont assemblés les uns aux autres par des organes d'assemblage associant chacun un jeu de plaques métalliques (15,15'), telle qu'en aluminium ou analogue, qui sont disposées de part et d'autre des blocs élémentaires (7), en interposition avec les éléments à ailettes (8). Ces plaques (15,15') sont reliées entre elles à leurs tranches par des cavaliers (16), de préférence isolants, ou organe d'assemblage analogue en prise conjointe sur chacune d'elles (15,15'). Les moyens de fixation de l'ossature (12) sur le radiateur principal (1) sont par exemple constitués d'une attache indépendante (17,18), telle qu'une tringle élastiquement déformable. Sur l'exemple de réalisation de la fig.5, cette attache (17) ceinture conjointement l'ossature (12) et le radiateur principal (1) qu'elle saisit au moyen d'un crochet à sa face arrière, tandis que sur l'exemple de réalisation de la fig.4, l'attache (18) est en prise sur le radiateur principal (1) par l'intermédiaire de reliefs coopérants. On notera que ces modalités d'agencement de l'attache indépendante (17,18) organisée en tringle ne sont données que pour exemple et à titre illustratif, l'attache pouvant éventuellement être par exemple subdivisée en plusieurs éléments.

On comprendra au regard des divers exemples de réalisation illustrés des moyens de fixation (11,17 ;18) à déformation élastique entre l'ossature (10,12) et le radiateur principal (1), que ces exemples de réalisation sont transposables de l'une à l'autre des diverses variantes de réalisation de l'ossature (10,12) sans pour autant déroger aux règles générales correspondantes énoncées.

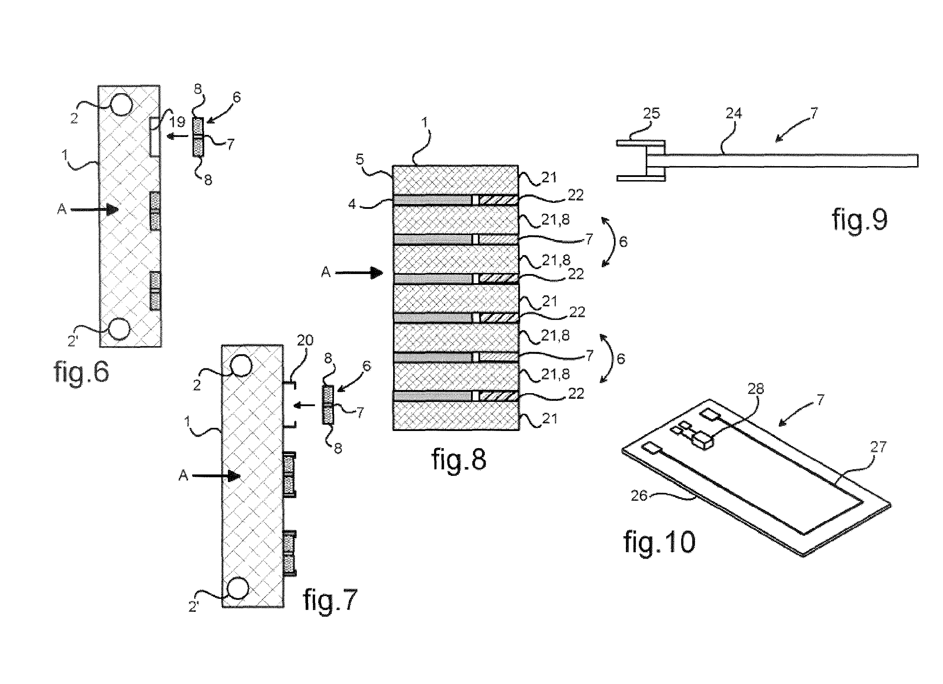

Sur les différents exemples de réalisation illustrés sur les fig.6 à fig.8, la structure de jonction est principalement formée par le radiateur principal (1) lui-même, qui comporte une pluralité d'organes de réception respective des éléments chauffants (6). Par exemple sur la fig.6, les organes de réception des éléments chauffants (6) sont formés de logements (19) ménagés sur au moins une face du radiateur principal (1), dans son plan général. Selon une autre variante de réalisation représentée sur la fig. 7, les organes de réception des éléments chauffants (6) sont formés de brides (20), crochets, organes élastiquement déformables ou analogues, qui sont rapportées sur le radiateur principal (1) dans son plan général. Selon un autre mode de réalisation représenté sur la fig.8, les organes de réception des éléments chauffants (6) sont formés à partir de prolongements (21) de deux éléments (5) à ailettes voisins du radiateur principal (1). Ces prolongements (21) constituent avantageusement les éléments à ailettes (8) des élément chauffants (6), en recevant entre eux les blocs élémentaires (7) constitutifs de ces derniers (6). On remarquera concernant cette dernière variante que dans le cas où l'espace compris entre deux prolongements (21) n'est pas occupé par un bloc élémentaire (7) du radiateur électrique, cet espace est préférentiellement occupé par un joint (22) en matière thermiquement isolante.

En revenant à la fig.1, les élément chauffants (6) du radiateur électrique sont par exemple principalement constitués d'un cadre (23) qui enveloppe un couple d'éléments à ailettes (8) disposés de part et d'autre du bloc élémentaire (7), notamment constitué d'une CTP ou analogue. Ce cadre (23) est avantageusement formée par des électrodes d'alimentation du bloc élémentaire (7). On notera que cette forme de réalisation des éléments chauffants (6) est transposable aux différentes variantes de réalisation de l'invention illustrées, dès lors qu'il est nécessaire pour ces variantes de mettre en oeuvre un élément chauffant (6) rassemblant sur un châssis indépendant, cadre (23) sur l'exemple illustré, au moins un bloc élémentaire (7) et au moins un élément à ailettes (8).

Sur les fig.9 et fig.10 sont respectivement illustrés divers exemples de réalisation de blocs élémentaires (7) susceptibles de coopérer avec des prolongements (21) des éléments à ailettes (5) du radiateur principal (1), tel que selon la variante de réalisation illustrée sur la fig.8. Par exemple sur la fig.9, le bloc élémentaire (7) est constitué par d'un ou plusieurs élément(s) CTP (24) à l'une au moins des extrémités du(des)quel(s) sont collées des électrodes (25), parcourant la totalité de la surface du bloc élémentaire (7). Sur l'exemple de réalisation illustré sur la fig.10, le bloc élémentaire (7) est principalement constitué d'une plaque de métal (26) comportant au moins une piste (27) formant résistance et portant de préférence au moins un organe électronique de commande, tels que (28).

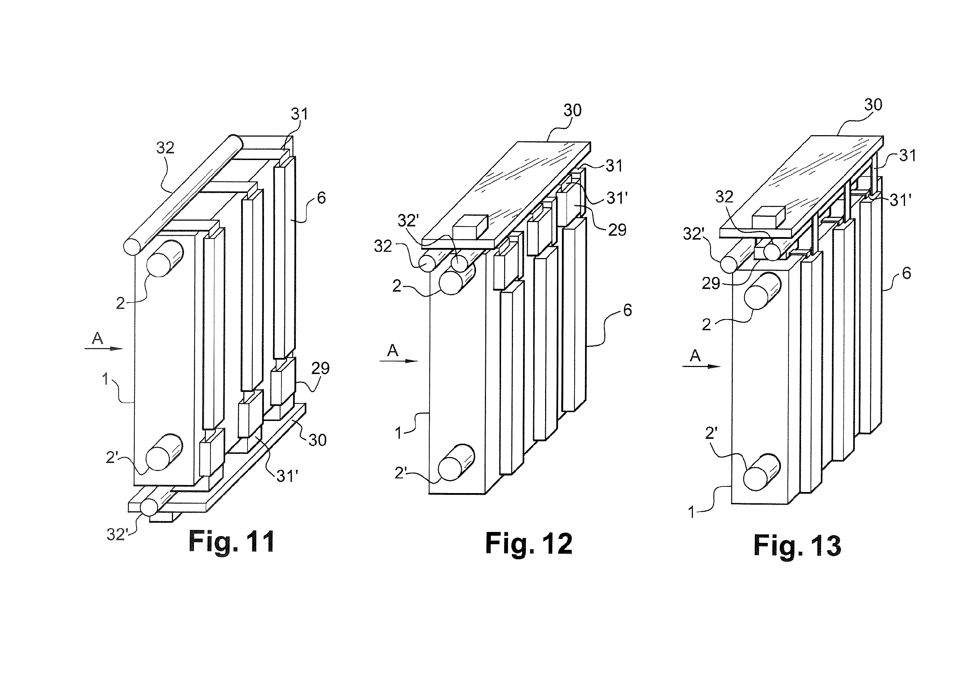

Sur les fig.11 à fig.13, le radiateur électrique est muni de moyens de connexion à la source électrique du véhicule et à des organes électroniques de commande. Ces derniers comprennent notamment au moins un commutateur (29) en relation avec une carte électronique (30). De tels commutateurs (29) sont notamment affectés à chacun des éléments chauffants (6). Les moyens de connexion du bloc élémentaire (7) à la source électrique du véhicule sont quant à eux notamment constitués par un couple de pattes (31,31') ou analogues, pour leur connexion respective à un couple de profilés (32,32') en relation avec la source électrique du véhicule. La carte électronique (30) est notamment fixée à proximité de l'une quelconque des tranches du radiateur principal (1). Le ou les commutateurs (29) sont quant à eux indifféremment placé à l'une quelconque des tranches du radiateur principal (1), voire à l'une de ses grandes faces.

Par exemple sur la fig.11, la carte électronique (30) est placée à la tranche inférieure du radiateur principal (1), et les commutateurs (29) affectés aux éléments chauffants (6), moins fragiles, sont placés contre la face frontale du radiateur principal (1). Sur les variantes illustrées sur les fig.12 et fig.13, la carte électronique (30) est placée à la tranche supérieure du radiateur principal (1), tandis que les commutateurs (29) affectés aux éléments chauffants (6) sont quant à eux placés soit à la face frontale du radiateur principal (1), tel qu'illustré sur la fig.12, soit à l'une des tranches du radiateur principal (1), telle que la tranche supérieure sur l'exemple illustré sur la fig.13. On remarquera que selon ces diverses variantes, les pattes de connexion (31,31') sont émergeantes aux extrémités des élément chauffants (6), indifféremment soit à une même extrémité tel que sur les exemples de réalisation des fig.12 et fig.13, soit respectivement à ses extrémités opposées tel que sur l'exemple de réalisation illustré sur la fig.11.

## Revendications

1. Ensemble de chauffage d'une installation de chauffage, de ventilation et/ou de climatisation, notamment pour habitacle d'un véhicule, associant un radiateur principal (1) à circulation de fluide comportant au moins une boîte collectrice (2,2') munie d'orifices (3,3') d'entrée et de sortie du fluide entre lesquels s'étend une pluralité de tubes (4) assurant la circulation du fluide, qui sont interposés entre et le long d'une pluralité d'éléments à ailettes (5), et un radiateur électrique constitué d'un corps comprenant au moins un organe chauffant électrique interposé entre une pluralité d'éléments à ailettes (8) et muni de moyens de connexion (31,31') à une source électrique et à des organes électroniques de commande (28,29,30), l'ensemble de chauffage comprenant en outre des moyens d'assemblage du radiateur principal (1) et du radiateur électrique **caractérisé en ce que** le corps du radiateur électrique est subdivisé en une pluralité d'éléments chauffants (6) indépendants, composés chacun d'au moins un bloc élémentaire (7) de chauffage électrique muni de dits moyens respectifs de connexion (31,31') et d'au moins un élément à ailettes (8), et **en ce que** la pluralité d'éléments chauffants (6) est rassemblée sur une structure de jonction du radiateur électrique sur au moins une face du radiateur principal (1).

2. Ensemble de chauffage selon la revendication 1, **caractérisé en ce que** la structure de jonction est formée d'une ossature (9,12) équipée d'organes (10 ; 13,13') de réception des éléments chauffants (6) et de moyens de fixation (11,17,18) contre la face du radiateur principal (1).

3. Ensemble de chauffage selon la revendication 2, **caractérisé en ce que** l'ossature (9) est agencée en structure rigide largement ajourée et équipée d'une pluralité d'organes (10) de réception respective des éléments chauffants (6).

4. Ensemble de chauffage selon la revendication 3, **caractérisé en ce que** lesdits organes (10) de réception des éléments chauffants (6) sont élastiquement déformables pour une liaison par emboîtement élastique des éléments chauffants (6) sur l'ossature (9).

5. Ensemble de chauffage selon la revendication 2, **caractérisé en ce que** l'ossature (12) est principalement constituée d'un jeu de réglettes (13,13') reliées l'une à l'autre à distance, entre lesquelles les éléments chauffants (6) sont disposés et conjointement maintenus par serrage.

6. Ensemble de chauffage selon la revendication 5, **caractérisé en ce que** les éléments chauffants (6) sont assemblés successivement les uns aux autres et sont enserrés entre les réglettes (13,13') par l'intermédiaire de moyens élastiques d'interposition (14,14').

7. Ensemble de chauffage selon la revendication 6, **caractérisé en ce que** les éléments chauffants (6) sont assemblés les uns aux autres par des organes d'assemblage associant chacun un jeu de plaques métalliques (15,15') qui sont disposées de part et d'autre des blocs élémentaires (7) en interposition avec les éléments à ailettes (8), et qui sont reliées entre elles à leurs tranches par des cavaliers (16), de préférence isolants.

8. Ensemble de chauffage selon l'une quelconque des revendication 2 à 7, **caractérisé en ce que** les moyens de fixation de l'ossature (9,12) sur le radiateur principal (1) sont constitués par un organe élastiquement déformable (11,17,18) en prise sur l'ossature (9,12) et sur le radiateur principal (1), de sorte que leur liaison l'un à l'autre soit obtenue par serrage élastique conjoint au moyen de l'organe de fixation (11,17,18) à l'encontre de sa déformation.

9. Ensemble de chauffage selon la revendication 1, **caractérisé en ce que** la structure de jonction est principalement formée par le radiateur principal (1) qui comporte une pluralité d'organes de réception (19,20,21) respective des éléments chauffants (6).

10. Ensemble de chauffage selon la revendication 9, **caractérisé en ce que** les organes de réception des éléments chauffants (6) sont formés de logements (19) ménagés sur au moins une face du radiateur principal (1).

11. Ensemble de chauffage selon la revendication 9, **caractérisé en ce que** les organes de réception des éléments chauffants (6) sont formés de brides (20) qui sont rapportées sur le radiateur principal (1) à au moins l'une de ses faces.

12. Ensemble de chauffage selon la revendication 9, **caractérisé en ce que** les organes de réception des éléments chauffants (6) sont formés à partir de prolongements (21) de deux éléments à ailettes (5) voisins du radiateur principal (1), lesdits prolongements (21) constituant les éléments à ailettes (8) des éléments chauffants (6) et recevant entre eux les blocs élémentaires (7) de ces derniers (6).

13. Ensemble de chauffage selon l'une quelconque des revendications précédentes, **caractérisé en ce que** des organes électroniques de contrôle comprennent au moins un commutateur (29) en relation avec une carte électronique (30), des moyens de connexion du bloc élémentaire (7) des élément chauffants (6) étant constitués par un couple de pattes de connexion (31,31') respective à un couple de profilés (32,32') en relation avec la source électrique du véhicule, et **en ce que** la carte électronique (30) est fixée à proximité de l'une quelconque des tranches du radiateur principal (1), le commutateur (29) étant quant à lui indifféremment placé à l'une quelconque des tranches du radiateur principal (1) et/ou de l'une des faces de ce dernier.

14. Ensemble de chauffage selon la revendication 13, **caractérisé en ce que** les pattes de connexion (31,31') des blocs élémentaires (7) sont émergeantes aux extrémités des éléments chauffants (6) indifféremment soit à une même extrémité soit respectivement à ses extrémités opposées.

15. Ensemble de chauffage selon l'une quelconque des revendications précédentes **caractérisé en ce que** les éléments chauffants (6) sont principalement constitués d'un cadre (23) enveloppant un couple d'éléments à ailettes (8) disposés de part et d'autre du bloc élémentaire (7), ce dernier étant constitué d'au moins un organe électrique chauffant.

16. Ensemble de chauffage selon la revendication 15, **caractérisé en ce que** le cadre (23) est formé par des électrodes d'alimentation du bloc élémentaire (7).

17. Ensemble de chauffage selon la revendication 13, **caractérisé en ce que** le bloc élémentaire (7) est constitué d'au moins un élément CTP (24) à l'une au moins des extrémités de laquelle sont collées des électrodes (25).

18. Ensemble de chauffage selon la revendication 13, **caractérisé en ce que** le bloc élémentaire (7) est principalement constitué d'une plaque de métal (26) comportant au moins une piste (27) formant résistance.
